# EUROPÄISCHE PATENTSCHRIFT

(11) **EP 2 483 133 B1**
(45) Veröffentlichungstag und Bekanntmachung des Hinweises auf die Patenterteilung: **14.05.2014**
(21) Anmeldenummer: 10739590.7
(22) Anmeldetag: 29.07.2010
(51) Int. Cl.: B62D 6/00

(54) **VERFAHREN ZUM BETRIEB EINES ELEKTRONISCHEN SERVOLENKSYSTEMS EINES KRAFTFAHRZEUGS**
METHOD FOR OPERATING AN ELECTRONIC SERVO STEERING SYSTEM OF A MOTOR VEHICLE
PROCÉDÉ POUR UTILISER UN SYSTÈME ÉLECTRONIQUE DE DIRECTION ASSISTÉE D'UN VÉHICULE AUTOMOBILE

(30) Priorität: 28.09.2009 DE 102009045046
(43) Veröffentlichungstag der Anmeldung: 08.08.2012
(73) Patentinhaber: ZF-Lenksysteme GmbH, 73527 Schwäbisch Gmünd (DE)
(72) Erfinder: BÜRING, Hendrik, 73525 Shwäbisch Gmünd (DE); WANNER, Thomas, 73525 Schwäbisch Gmünd (DE); GROSSHEIM, Reinhard, 73453 Abtsgmünd (DE)
(86) Internationale Anmeldenummer: PCT/EP2010/061027
(87) Internationale Veröffentlichungsnummer: WO 2011/035960

(56) Entgegenhaltungen:
- DE-A1- 19 751 125
- DE-A1-102006 004 685
- DE-A1-102006 008 156
- DE-A1-102006 041 236
- DE-A1-102006 052 092
- DE-A1-102007 013 267

## Beschreibung

Die Erfindung betrifft ein Verfahren zum Betrieb eines elektronischen Servolenksystems eines Kraftfahrzeugs gemäß dem Oberbegriff von Anspruch 1. Die Erfindung betrifft ebenfalls ein Computerprogramm und ein Computerprogrammprodukt mit Programmcodemitteln, um ein derartiges Verfahren durchzuführen. Des Weiteren betrifft die Erfindung ein elektronisches Servolenksystem eines Kraftfahrzeugs.

Ein Lenksystem mit Überlagerungsmitteln ist aus der DE 197 51 125 A1 bekannt. Dort wird die Bewegung (Zusatzwinkel bzw. Motorwinkel) eines Stellantriebs, d. h. eines Elektromotors mittels eines Überlagerungsgetriebes (beispielsweise ein Planetengetriebe) mit dem Lenkradwinkel überlagert. Mit Hilfe der Überlagerungsmittel ist es möglich, einen von der Lenkhandhabe vorgegebenen Lenkradwinkel zur Erhöhung der Fahrstabilität bzw. des Komforts mit einem Zusatzwinkel zu überlagern, so dass sich fahrdynamikabhängig bzw. komfortabhängig ein variables Übersetzungsverhältnis zwischen Lenkradwinkel und mittlerem Radlenkwinkel der lenkbaren Räder des Kraftfahrzeugs einstellt. Dadurch ist es sicherheitstechnisch z. B. möglich, ein Kraftfahrzeug, welches auszubrechen droht, durch eine entsprechende Korrektur des Radlenkwinkels wieder in eine stabile Fahrsituation zurückzuführen. Die Überlagerungsmittel können andere Fahrdynamiksysteme (z. B. ein elektronisches Stabilitätsprogramm (ESP) oder ein Antiblockiersystem (ABS)) unterstützen. Komforttechnisch ist es auch möglich, einem Lenkradwinkel beispielsweise einen geschwindigkeitsabhängigen Zusatzwinkel zu überlagern. Dadurch kann bei niedrigen Fahrzeuggeschwindigkeiten ein relativ kleines Übersetzungsverhältnis eingestellt werden, d. h. eine relativ kleine Drehung der Lenkhandhabe führt zu einem relativ großen Lenkwinkel der Räder (gegenüber der mechanischen Grundübersetzung direkteres Übersetzungsverhältnis). Bei hohen Fahrzeuggeschwindigkeiten kann dagegen ein relativ großes Übersetzungsverhältnis (gegenüber der mechanischen Grundübersetzung indirekteres Übersetzungsverhältnis) eingestellt werden, damit sich die Fahrstabilität des Kraftfahrzeugs erhöht. Auch das erfindungsgemäße elektronische Servolenksystem weist Überlagerungsmittel auf.

Zur Bestimmung der aktuell durch das Überlagerungslenksystem einzustellenden Lenkübersetzung bzw. des einzustellenden Übersetzungsverhältnisses ist es bekannt, Messwerte bzw. Fahrzeugparameter oder fahrzeugspezifische Größen, wie etwa die aktuelle Fahrzeuggeschwindigkeit und den aktuellen Lenkradwinkel als Eingangsgrößen heranzuziehen und über ein Modell, eine Kennlinie oder ein Kennfeld die einzustellende Lenkübersetzung und damit den Soll-Zusatzwinkel für den Elektromotor zu ermitteln.

Zur Vorgabe von derartigen Kennlinien bzw. Kennfeldern in aktiven Lenksystemen werden in der Regel einzelne Stützstellen ermittelt. In den übrigen Bereichen wird bisher eine einfache und schnell zu berechnende lineare Interpolation angewendet, so dass sich im Wesentlichen ein Polygonzug ergibt. Dabei kommt es an den Stützstellen in Folge einer Knickbildung zu Sprüngen in der ersten bzw. zweiten Ableitung des Ausgangssignals bzw. der Ausgangsgröße. Wird als Ausgangssignal der Zusatzwinkel bzw. der Soll-Zusatzwinkel verwendet, hat dies Drehzahlschwankungen zur Folge, welche zu einem schlechteren Akustikverhalten des angesteuerten Elektromotors führen können.

Die DE 197 51 137 A1 betrifft ein Lenksystem für ein Kraftfahrzeug mit einem Lenkantriebsstrang, in dem wenigstens ein lenkbares Rad, ein Stellantrieb und ein Überlagerungsgetriebe und das vom Fahrer des Fahrzeugs betätigbare Lenkrad sowie mechanisch ausgestaltete Umlenkmittel angeordnet sind.

In der DE 10 2006 008 156 A1 ist ein Verfahren zur Bestimmung der Lenkübersetzung eines Fahrzeugs angegeben, wobei während einer stabilen Fahrt des Fahrzeugs die Lenkübersetzung aus erfassten Messwerten unter Berücksichtigung von Fahrzeugparametern bestimmt wird.

Der vorliegenden Erfindung liegt die Aufgabe zugrunde, ein Verfahren zum Betrieb eines elektronischen Servolenksystems der eingangs erwähnten Art zu schaffen, welches einen harmonischen Verlauf des Zusatzwinkels, insbesondere zur Verbesserung des Akustikverhaltens des elektronischen Servolenksystems, bereitstellt. Diese Aufgabe wird erfindungsgemäß dadurch gelöst, dass der Soll-Zusatzwinkel über wenigstens eine Approximationsfunktion ermittelt wird, welche wenigstens in deren ersten beiden Ableitungen stetig ist und welche wenigstens eine erste fahrzeugspezifische Größe als Eingangsgröße aufweist.

Durch diese Maßnahmen erhält der Soll-Zusatzwinkel einen harmonischen Verlauf mit einer Interpolation ohne Sprünge in der ersten und zweiten Ableitung, da es zu keinen Knickbildungen bei dessen direkter Bestimmung durch die wenigstens eine Approximationsfunktion kommt. In vorteilhafter Weise wird auch der Speicherbedarf der benötigten Kennfelder bzw. Kennlinien verringert. Zudem erhöht sich die Laufzeit des Programmcodes auf dem Steuergerät nicht und der Applikationsprozess wird vereinfacht.

Mehrere, insbesondere unterschiedliche Approximationsfunktionen können in einem Kennfeld abgelegt sein, welches wenigstens eine zweite fahrzeugspezifische Größe als Eingangsgröße aufweist. Sonach können verschiedene Approximationsfunktionen für unterschiedliche Werte einer zweiten fahrzeugspezifischen Größe hinterlegt werden. Diese können innerhalb des Kennfelds Stützstellen bilden, zwischen denen ebenfalls, insbesondere mittels linearer Interpolation, Polynominterpolation oder Spline-Interpolation (z. B. mit quadratischen oder kubischen Spline-Funktionen) interpoliert wird.

Vorteilhaft ist es, wenn die wenigstens eine Approximationsfunktion ein Polynom, insbesondere auf Newton-Basis ist. Dabei wird ein Interpolationspolynom bestimmt, welches exakt durch die vorgegebenen Stützstellen des Zusatzwinkels verläuft und diese damit interpoliert. Die so genannte Newton-Basis hat sich zur Darstellung und Auswertung bewährt. Es kann mittels eines PC-basierten Programms anhand von mehreren Punkten bzw. Stützstellen (Motorwinkel-aufgetragen auf den Lenkwinkel) eine Newton-Interpolation durchgeführt werden. Diese führt zu einer Polynomgleichung. Die einzelnen Polynomkoeffizienten können dann aus diesem Programm entnommen, in ein Applikationswerkzeug überführt und in das Steuergerät übertragen werden. Es kann damit die Sollwertberechnung durch Lösen einer einfachen Polynomgleichung über die Auslenkung bzw. den Lenkradwinkel, welche akustisch relevant ist, durchgeführt werden. Außerdem kann durch weitere Hilfsmittel wie beispielweise die Darstellung der ersten und zweiten Ableitungen des Interpolationspolynoms das akustische Verhalten beobachtet und entsprechend weiter optimiert werden.

Sehr vorteilhaft ist es, wenn die wenigstens eine Approximationsfunktion eine Spline-Funktion mit wenigstens quadratischem Grad, insbesondere eine kubische Spline-Funktion ist. Im Gegensatz zur vorstehend erwähnten Polynominterpolation oszillieren die resultierenden Spline-Funktionen deutlich weniger stark, was auf einfache Weise bessere Approximationseigenschaften erlaubt. Die Vorgehensweise bzw. die Vorteile ergeben sich analog zu der vorstehend beschriebenen Anwendung der Interpolationspolynome.

Die wenigstens eine erste oder die wenigstens eine zweite fahrzeugspezifische Größe können die insbesondere aktuelle Fahrzeuggeschwindigkeit bzw.
Fahrzeuglängsgeschwindigkeit oder der insbesondere aktuelle Lenkradwinkel bzw. eine diesen charakterisierende Größe sein. Somit kann die eingangs erwähnte zweidimensionale Abhängigkeit der Soll-Lenkübersetzung bzw. des Soll-Zusatzwinkels von der aktuellen Fahrzeuggeschwindigkeit und dem aktuellen Lenkradwinkel auf einfache Weise abgebildet werden. Selbstverständlich können noch weitere fahrzeugspezifische Größen in Frage kommen.

Erfindungsgemäß können bei der Ermittlung der wenigstens einen Approximationsfunktion Kinematikdaten, insbesondere die mechanische Grundübersetzung des elektronischen Servolenksystems berücksichtigt werden.

Das erfindungsgemäße Verfahren zum Betrieb eines elektronischen Servolenksystems eines Kraftfahrzeugs ist vorzugsweise als Computerprogramm auf einem Steuergerät des elektronischen Servolenksystems realisiert. Dazu ist das Computerprogramm in einem Speicherelement des Steuergeräts gespeichert. Durch Abarbeitung auf einem Mikroprozessor des Steuergeräts wird das Verfahren ausgeführt. Das Computerprogramm kann auf einem computerlesbaren Datenträger (Diskette, CD, DVD, Festplatte, USB-Memorystick oder dergleichen) oder einem Internetserver als Computerprogrammprodukt gespeichert sein und von dort aus in das Speicherelement des Steuergeräts übertragen werden. Ein derartiges Computerprogramm bzw. Computerprogrammprodukt mit Programmcodemitteln ist in Anspruch 7 bzw. Anspruch 8 angegeben.

Anspruch 9 betrifft ein elektronisches Servolenksystem eines Kraftfahrzeugs.

Nachfolgend ist anhand der Zeichnung prinzipmäßig ein Ausführungsbeispiel der Erfindung angegeben.

Es zeigen:
Fig. 1 eine vereinfachte schematische Darstellung eines Überlagerungslenksystems, bei welchem ein erfindungsgemäßes Verfahren zum Einsatz kommt;
Fig. 2 ein vereinfachtes Signalflussdiagramm einer Nutzfunktion, welche ein variables Übersetzungsverhältnis innerhalb eines erfindungsgemäßen Verfahrens bereitstellt;
Fig. 3 eine stark vereinfachte Darstellung einer Ermittlung eines Soll-Zusatzwinkels über Kennfelder gemäß dem Stand der Technik; und
Fig. 4 eine stark vereinfachte Darstellung einer Ermittlung des Soll-Zusatzwinkels im Rahmen eines erfindungsgemäßen Verfahrens.

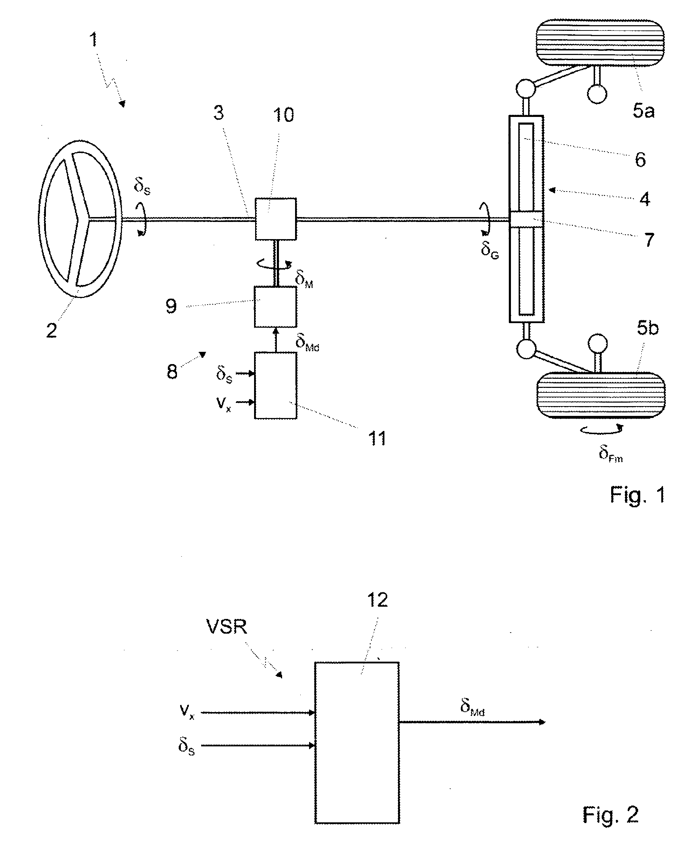

Fig. 1 zeigt ein elektronisches Servolenksystem 1 bzw. Überlagerungslenksystem eines nicht dargestellten Kraftfahrzeugs. Das elektronische Servolenksystem 1 weist eine als Lenkrad 2 ausgebildete Lenkhandhabe auf. Das Lenkrad 2 ist über eine Gelenkwelle bzw. Lenksäule 3 mit einem Lenkgetriebe 4 verbunden. Das Lenkgetriebe 4 dient dazu, einen Drehwinkel der Lenksäule 3 in einen Radlenkwinkel δ_{Fm} von lenkbaren Rädern 5a, 5b des Kraftfahrzeugs umzusetzen. Das Lenkgetriebe 4 weist eine Zähnstange 6 und ein Ritzel 7 auf, an welches die Lenksäule 3 angreift. Das elektronische Servolenksystem 1 umfasst darüber hinaus Überlagerungsmittel 8, die einen als Elektromotor 9 ausgebildeten Stellantrieb bzw. Zusatzwinkelsteller und ein von diesem angetriebenes Überlagerungsgetriebe 10 aufweisen. Das Überlagerungsgetriebe 10 ist als Planetengetriebe ausgebildet. In weiteren Ausführungsbeispielen könnte das Überlagerungsgetriebe 10 auch als Wellgetriebe oder dergleichen ausgebildet sein.

Durch das Lenkrad 2 wird ein Lenkradwinkel δ_{S} als Maß für einen gewünschten Radlenkwinkel δ_{Fm} der lenkbaren Räder 5a, 5b des Kraftfahrzeugs vorgegeben. Mit Hilfe des Elektromotors 9 wird dann ein Überlagerungswinkel bzw. Zusatzwinkel δ_{M} generiert und durch das Überlagerungsgetriebe 10 mit dem Lenkradwinkel δ_{S} bzw. dem Drehwinkel der Lenksäule 3 überlagert. Der Zusatzwinkel δ_{M} wird grundsätzlich zur Realisierung von ein oder mehreren Nutzfunktionen, insbesondere zur Verbesserung der Fahrdynamik des Kraftfahrzeugs bzw. des Komforts, insbesondere durch Bereitstellung einer variablen Lenkübersetzung bzw. eines variablen Übersetzungsverhältnisses zwischen Lenkradwinkel δ_{S} und Radlenkwinkel 5_{Fm} der lenkbaren Räder 5a, 5b, erzeugt. Die Summe aus Lenkradwinkel δ_{S} und Zusatzwinkel δ_{M} ergibt den Eingangswinkel des Lenkgetriebes 4 bzw. im vorliegenden Ausführungsbeispiel den Ritzelwinkel δ_{G}.

Die Überlagerungsmittel 8 weisen ein elektronisches Steuergerät 11 auf, welches unter anderem der Regelung des Zusatzwinkels δ_{M} und des abgegebenen Moments des Elektromotors 9 dient. Auf dem elektronischen Steuergerät 11 läuft dazu ein Regelungsverfahren ab, welches als Regelungsstruktur bzw. als Computerprogramm auf einem nicht dargestellten Mikroprozessor des Steuergeräts 11 ausgeführt ist. Der Elektromotor 9 wird mit einem elektrischen Ansteuersignal δ_{Md}, welches dem Sollwert des von dem Elektromotor 9 zu erzeugenden Zusatzwinkels δ_{M}, also dem Soll-Zusatzwinkel entspricht, angesteuert. Der Soll-Zusatzwinkel δ_{Md} ergibt sich dabei in der Regel durch eine Summierung von Teilsoll-Zusatzwinkeln unterschiedlicher Nutzfunktionen (z. B. der variablen Lenkübersetzung) des elektronischen Servolenksystems 1. Der Einfachheit halber wird nachfolgend jedoch der Soll-Zusatzwinkel δ_{Md} mit dem Teilsoll-Zusatzwinkel der variablen Lenkübersetzung gleichgesetzt. Die Ansteuerung bzw. Regelung des Elektromotors 9 erfolgt dabei üblicherweise in Abhängigkeit von der Fahrzeuggeschwindigkeit vₓ des Kraftfahrzeugs, d. h. das durch eine Nutzfunktion bereitgestellte variable Übersetzungsverhältnis zwischen dem Lenkradwinkel δ_{S} und dem Ritzelwinkel δ_{G} bzw. dem Radlenkwinkel δ_{Fm} der Räder 5a, 5b wird durch die Überlagerung des Lenkradwinkels δ_{S} mit verschiedenen, geschwindigkeitsabhängigen Zusatzwinkeln δ_{M} in Abhängigkeit von der aktuellen Fahrzeuggeschwindigkeit vₓ bzw. dem aktuellen Lenkradwinkel δ_{S} eingestellt. Damit die vorstehend angeführten Steuerungs- bzw. Regelungsfunktionen ausgeführt werden können, erhält das Steuergerät 11 unter anderem die aktuelle Fahrzeuggeschwindigkeit vₓ (z. B. über den CAN-Bus des Kraftfahrzeugs) und den Lenkradwinkel δ_{S} als Eingangssignale. Das elektronische Servolenksystem 1 kann in weiteren nicht dargestellten Ausführungsbeispielen den Überlagerungsmitteln 8 nachgeordnet auch einen elektrischen oder hydraulischen Servoantrieb aufweisen, welcher unter anderem der variablen Momentenunterstützung dient.

Erfindungsgemäß wird das elektronische Servolenksystem 1 nun mittels eines Verfahrens betrieben, bei welchem mittels der Lenkhandhabe 2 der Lenkradwinkel δ_{S} als Maß für einen gewünschten Radlenkwinkel δ_{Fm} für die lenkbare Räder 5a, 5b des Kraftfahrzeugs vorgegeben wird, bei welchem eine Nutzfunktion VSR (siehe Figur 2) ein variables von den aktuellen fahrzeugspezifischen Größen Fahrzeuggeschwindigkeit vₓ und Lenkradwinkel δ_{S} abhängiges Übersetzungsverhältnis zwischen dem Lenkradwinkel δ_{S} und dem Radlenkwinkel Ö_{Fm} bereitstellt, indem ein Zusatzwinkel δ_{M} mittels des berechneten einzuregelnden Soll-Zusatzwinkels δ_{Md} generiert und der Eingangswinkel δ_{G} des Lenkgetriebes 4 des elektronischen Servolenksystems 1 aus einer Überlagerung des Lenkradwinkels δ_{S} mit dem Zusatzwinkel δ_{M} erzeugt wird, wobei der Eingangswinkel δ_{G} des Lenkgetriebes 4 in den Radlenkwinkel δ_{Fm} für die lenkbaren Räder 5a, 5b des Kraftfahrzeugs umgesetzt wird, wobei der jeweilige einzuregelnde Soll-Zusatzwinkel δ_{Md} anhand der fahrzeugspezifischen Größen Fahrzeuggeschwindigkeit vₓ und Lenkradwinkel δ_{S} als Eingangsgrößen aus wenigstens einer Kennlinie und/oder wenigstens einem Kennfeld über Stützstellen und/oder durch Interpolation ermittelt wird.

Die Nutzfunktion VSR, welche das variable Übersetzungsverhältnis innerhalb des erfindungsgemäßen Verfahrens bereitstellt, wird nachfolgend anhand des in Fig. 2 ausschnittsweise dargestellten vereinfachten Block- bzw. Signalflussdiagramms verdeutlicht. Wie aus Fig. 2 ersichtlich, erhält die Nutzfunktion VSR in einem Funktionsblock 12 die aktuelle Fahrzeuggeschwindigkeit vₓ und den aktuellen Lenkradwinkel δ_{S} als Eingangssignale bzw. Eingangsgrößen und errechnet daraus als Ausgangssignal den Soll-Zusatzwinkel δ_{Md}. Zusätzlich kann in dem Funktionsblock 12 eine Endanschlagsabschaltung bzw. -behandlung realisiert sein, welche gegebenenfalls den Soll-Zusatzwinkel δ_{Md} modifiziert oder konstant hält. Die Endanschlagsabschaltung wird aktiviert, wenn ein von der Nutzfunktion VSR ermittelter Sollbetrag des Eingangswinkels δ_{G} des Lenkgetriebes 4 bzw. eine Lenkposition in einem vorgegebenen Bereich eines mechanischen Endanschlags der Zahnstange 6 des Lenkgetriebes 4 liegt.

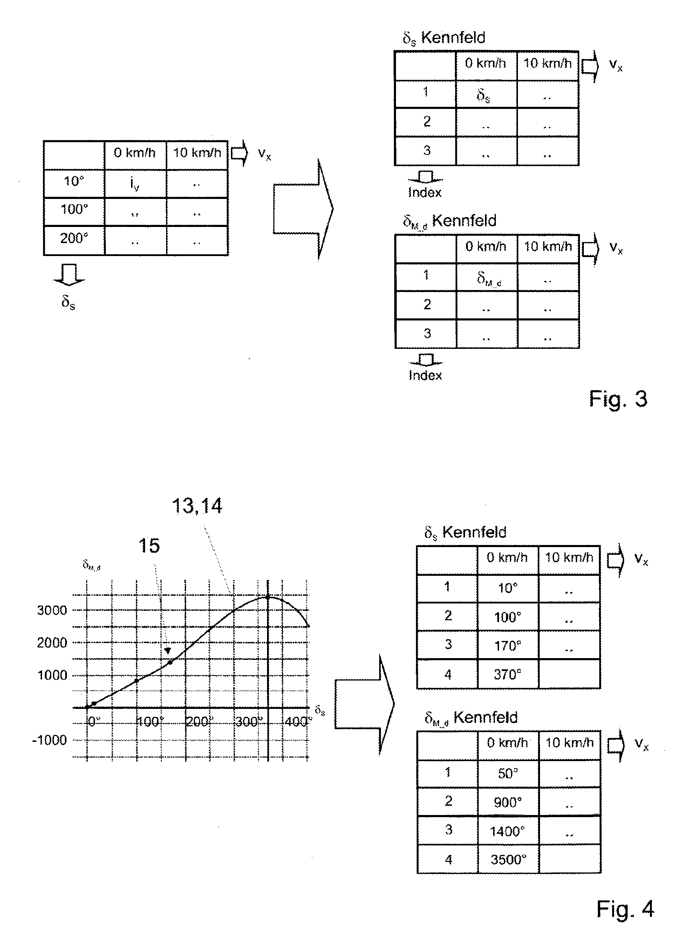

Figur 3 zeigt eine stark vereinfachte Darstellung einer Ermittlung eines Soll-Zusatzwinkels δ_{Md} über Kennfelder gemäß dem Stand der Technik. Dabei ist links eine zweidimensionale Look-Up-Tabelle der Sollübersetzung iᵥ dargestellt. In der Tabelle ist horizontal ist die Fahrzeuggeschwindigkeit vₓ und vertikal der Lenkradwinkel δ_{S} als Index vorgesehen. Aus dieser Tabelle ergeben sich, wie durch den Pfeil angedeutet die auf der rechten Seite von Figur 3 dargestellten Kennfelder des Lenkradwinkels δ_{S} (oberes Kennfeld) und des Zusatzwinkels δ_{Md} (unteres Kennfeld). Über den Index kann bei vorgegebenem aktuellen Lenkradwinkel ä_{S} und vorgegebener aktueller Fahrzeuggeschwindigkeit vₓ der zugehörige einzustellende Zusatzwinkel δ_{Md} ermittelt werden.

In Figur 4 ist eine stark vereinfachte Darstellung einer erfindungsgemäßen Ermittlung des Soll-Zusatzwinkels δ_{Md} gezeigt. Wie aus dem Schaubild auf der linken Seite von Figur 4 ersichtlich, wird bei dem erfindungsgemäßen Verfahren zum Betrieb eines elektronischen Servolenksystems 1 der Soll-Zusatzwinkel δ_{Md} über eine Approximationsfunktion 13, 14 ermittelt wird, welche wenigstens in deren ersten beiden Ableitungen stetig ist und welche den aktuellen Lenkradwinkel δ_{S} als erste fahrzeugspezifische Größe bzw. als Eingangsgröße aufweist. Bei der Ermittlung der Approximationsfunktion 13, 14 wurden Kinematikdaten des elektronischen Servolenksystems 1 berücksichtigt. In dem Schaubild auf der linken Seite von Figur 4 ist auf der horizontalen Achse der Lenkradwinkel δ_{S} und auf der vertikalen Achse der Soll-Zusatzwinkel δ_{Md} aufgetragen. Die Approximationsfunktion 13, 14 bezieht sich auf eine Fahrzeuggeschwindigkeit vₓ von 0 km/h.

Im vorliegenden Ausführungsbeispiel ist die Approximationsfunktion eine kubische Spline-Funktion 13. In weiteren Ausführungsbeispielen könnte sie auch eine Spline-Funktion mit quadratischem Grad oder ein Polynom 14, insbesondere auf Newton-Basis sein. Stützstellen 15 sind durch Punkte auf der Approximationsfunktion 13, 14 hervorgehoben.

Daraus ergeben sich wie durch den Pfeil angedeutet die Kennfelder auf der rechten Seite von Figur 4. In dem oberen Kennfeld des Lenkradwinkels δ_{S} ist horizontal als zweite fahrzeugspezifische Größe die Fahrzeuggeschwindigkeit vₓ als Index aufgetragen. Vertikal kann ein Index abgelesen werden, mit welchem ein Bezug in das untere Kennfeld des Soll-Zusatzwinkels δ_{Md} hergestellt wird. In dem unteren Kennfeld sind mehrere unterschiedliche Spline-Funktionen 13 abgelegt, welche über die zweite fahrzeugspezifische Größe d. h. die Fahrzeuggeschwindigkeit vₓ als Eingangsgröße ausgewählt werden können. In der Spalte mit der Fahrzeuggeschwindigkeit vₓ von 0 km/h sind beispielhaft die Werte des Soll-Zusatzwinkels δ_{Md} an den Stützstellen 15 der Spline-Funktion 13 eingetragen. Weitere Spline-Funktionen 13 sind in den Spalten des unteren Kennfelds für andere Fahrzeuggeschwindigkeiten vₓ eingetragen (z. B. pro 10 km/h innerhalb des Fahrzeuggeschwindigkeitsbereichs - in Figur 4 nur für 0 km/h und 10 km/h angedeutet). Wenn für alle Fahrzeuggeschwindigkeiten vₓ die Stützstellen 15 bezüglich des Lenkradwinkels δ_{S} gleich bleiben, wird nur das untere Kennfeld des Soll-Zusatzwinkels δ_{Md} benötigt.

Zwischen den für unterschiedliche Fahrzeuggeschwindigkeiten vₓ ermittelten Spline-Funktionen 13 kann ebenfalls, insbesondere mittels linearer Interpolation, Polynominterpolation oder Spline-Interpolation (z. B. mit quadratischen oder kubischen Spline-Funktionen) interpoliert werden.

Das erfindungsgemäße Verfahren zum Betrieb des elektronischen Servolenksystems 1 ist als Computerprogramm auf dem Steuergerät 11 realisiert, wobei auch andere Lösungen selbstverständlich in Frage kommen. Dazu ist das Computerprogramm in einem Speicherelement des Steuergeräts 11 gespeichert. Durch Abarbeitung auf einem Mikroprozessor des Steuergeräts 11 wird das Verfahren ausgeführt. Das Computerprogramm kann auf einem nicht dargestellten computerlesbaren Datenträger (Diskette, CD, DVD, Festplatte, USB-Memorystick oder dergleichen) oder einem Internetserver als Computerprogrammprodukt gespeichert sein und von dort aus in das Speicherelement des Steuergeräts 11 übertragen werden.

### Bezugszeichenliste

- 1: elektronisches Servolenksystem
- 2: Lenkrad
- 3: Gelenkwelle / Lenksäule
- 4: Lenkgetriebe
- 5a, 5b: lenkbare Räder
- 6: Zahnstange
- 7: Ritzel
- 8: Überlagerungsmittel
- 9: Zusatzwinkelsteller / Elektromotor
- 10: Überlagerungsgetriebe
- 11: elektronisches Steuergerät der Überlagerungsmittel
- 12: Funktionsblock
- 13: Spline-Funktion
- 14: Polynom
- 15: Stützstellen
- δ_{Fm}: Radlenkwinkel bzw. Lenkwinkel
- δ_{G}: Ritzelwinkel
- δ_{S}: Lenkradwinkel
- vₓ: Fahrzeuggeschwindigkeit
- δ_{M}: Zusatzwinkel
- δ_{Md}: Sollwert des Zusatzwinkels
- iᵥ: Sollübersetzung
- VSR: Nutzfunktion variable Lenkübersetzung

## Patentansprüche

1. Verfahren zum Betrieb eines elektronischen Servolenksystems (1) eines Kraftfahrzeugs, bei welchem mittels einer Lenkhandhabe (2) ein Lenkradwinkel (δ_{S}) als Maß für einen gewünschten Radlenkwinkel (δ_{Fm}) für wenigstens ein lenkbares Rad (5a,5b) des Kraftfahrzeugs vorgegeben wird, bei welchem eine Nutzfunktion (VSR) ein variables von wenigstens einer fahrzeugspezifischen Größe (vₓ,δ_{S}) abhängiges Übersetzungsverhältnis zwischen dem Lenkradwinkel (δ_{S}) und dem Radlenkwinkel (δ_{Fm}) bereitstellt, indem ein Zusatzwinkel (δ_{M}) mittels eines ermittelten einzuregelnden Soll-Zusatzwinkels (δ_{Md}) generiert und ein Eingangswinkel (δ_{G}) eines Lenkgetriebes (4) des elektronischen Servolenksystems (1) aus einer Überlagerung des Lenkradwinkels (δ_{S}) mit dem Zusatzwinkel (δ_{M}) erzeugt wird, wobei der Eingangswinkel (δ_{G}) des Lenkgetriebes (4) in den Radlenkwinkel (δ_{Fm}) für das wenigstens eine lenkbare Rad (5a,5b) des Kraftfahrzeugs umgesetzt wird, wobei der jeweilige einzuregelnde Soll-Zusatzwinkel (δ_{Md}) anhand der wenigstens einen fahrzeugspezifischen Größe (vₓ,δ_{S}) als Eingangsgröße aus wenigstens einer Kennlinie und/oder wenigstens einem Kennfeld über Stützstellen und/oder durch Interpolation ermittelt wird, **dadurch gekennzeichnet, dass** der Soll-Zusatzwinkel (δ_{Md}) über wenigstens eine Approximationsfunktion (13,14) ermittelt wird, welche wenigstens in deren ersten beiden Ableitungen stetig ist und welche wenigstens eine erste fahrzeugspezifische Größe (vₓ,δ_{S}) als Eingangsgröße aufweist.

2. Verfahren nach Anspruch 1, **dadurch gekennzeichnet, dass** mehrere, insbesondere unterschiedliche Approximationsfunktionen (13,14) in einem Kennfeld abgelegt sind, welches wenigstens eine zweite fahrzeugspezifische Größe (vₓ,δ_{S}) als Eingangsgröße aufweist.

3. Verfahren nach Anspruch 1 oder 2, **dadurch gekennzeichnet, dass** die wenigstens eine Approximationsfunktion ein Polynom (14), insbesondere auf Newton-Basis ist.

4. Verfahren nach Anspruch 1 oder 2, **dadurch gekennzeichnet, dass** die wenigstens eine Approximationsfunktion eine Spline-Funktion mit wenigstens quadratischem Grad, insbesondere eine kubische Spline-Funktion (13) ist.

5. Verfahren nach einem der Ansprüche 1 bis 4, **dadurch gekennzeichnet, dass** die wenigstens eine erste oder die wenigstens eine zweite fahrzeugspezifische Größe die Fahrzeuggeschwindigkeit (vₓ) oder der Lenkradwinkel (δ_{S}) ist.

6. Verfahren nach einem der Ansprüche 1 bis 5, **dadurch gekennzeichnet, dass** bei der Ermittlung der wenigstens einen Approximationsfunktion (13,14) Kinematikdaten des elektronischen Servolenksystems (1) berücksichtigt werden.

7. Computerprogramm mit Programmcodemitteln, um ein Verfahren gemäß einem der Ansprüche 1 bis 6 durchzuführen, wenn dass Programm auf einem Mikroprozessor eines Computers, insbesondere auf einem elektronischen Steuergerät (11) eines elektronischen Servolenksystems (1), ausgeführt wird.

8. Computerprogrammprodukt mit Programmcodemitteln, die auf einem computerlesbaren Datenträger gespeichert sind, um ein Verfahren gemäß einem der Ansprüche 1 bis 6 durchzuführen, wenn dass Programm auf einem Mikroprozessor eines Computers, insbesondere auf einem elektronischen Steuergerät (11) eines elektronischen Servolenksystems (1), ausgeführt wird.

9. Elektronisches Servolenksystem (1) eines Kraftfahrzeugs, mit
- einer Lenkhandhabe (2) zur Vorgabe eines Lenkradwinkels (δ_{S}) als Maß für einen gewünschten Radlenkwinkel (δ_{Fm}) für wenigstens ein lenkbares Rad (5a,5b) des Kraftfahrzeugs,
- einem Lenkgetriebe (4), welches den Lenkradwinkel (δ_{S}) in den Radlenkwinkel (δ_{Fm}) des wenigstens einen lenkbaren Rades (5a,5b) des Kraftfahrzeugs umsetzt,
- Überlagerungsmitteln (8) zur Erzeugung eines Zusatzwinkels (δ_{M}) durch einen Zusatzwinkelsteller (9) und zur Erzeugung eines Eingangswinkels (δ_{G}) des Lenkgetriebes **(4)** aus einer Überlagerung des Lenkradwinkels (δ_{S}) mit dem Zusatzwinkel (δ_{M}), und
- einem elektronischen Steuergerät (11) eingerichtet zur Ausführung des Computerprogramms gemäß Anspruch 7.

## Claims

1. Method for operating an electronic servo steering system (1) of a motor vehicle, in which a steering wheel angle (δ_{S}) is predefined by means of a steering handle (2) as a measure of a desired wheel steering angle (δ_{Fm}) for at least one steerable wheel (5a, 5b) of the motor vehicle, in which a utility function (VSR) makes available a variable transmission ratio, dependent on at least one vehicle-specific variable (Vₓ, δ_{S}), between the steering wheel angle (δₛ) and the wheel steering angle (δ_{Fm}) in that an additional angle (δ_{M}) is generated by means of a determined setpoint additional angle (δ_{Md}) which is to be applied and an input angle (δ_{G}) of a steering gear (4) of the electronic servo steering system (1) is produced from superimposition of the additional angle (δₘ) on the steering wheel angle (δ_{S}), wherein the input angle (δ_{G}) of the steering gear (4) is converted into the wheel steering angle (δ_{Fm}) for the at least one steerable wheel (5a, 5b) of the motor vehicle, wherein the respective setpoint additional angle (δ_{Md}) which is to be applied is determined on the basis of the at least one vehicle-specific variable (vₓ, δ_{S}) as an input variable from at least one characteristic curve and/or at least one characteristic diagram by means of reference points and/or by interpolation, **characterized in that** the setpoint additional angle (δ_{Md}) is determined by means of at least one approximation function (13, 14) which is continuous at least in the first two derivatives thereof and which has at least one first vehicle-specific variable (vₓ, δ_{S}) as an input variable.

2. Method according to Claim 1, **characterized in that** multiple, in particular different, approximation functions (13, 14) are stored in a characteristic diagram which has at least one second vehicle-specific variable (vₓ, δ_{S}) as an input variable.

3. Method according to Claim 1 or 2, **characterized in that** the at least one approximation function is a polynomial (14), in particular on a Newtonian basis.

4. Method according to Claim 1 or 2, **characterized in that** the at least one approximation function is a spline function of at least quadratic order, in particular a cubic spline function (13).

5. Method according to one of Claims 1 to 4, **characterized in that** the at least one first or the at least one second vehicle-specific variable is the vehicle speed (vₓ) or the steering wheel angle (δ_{S}).

6. Method according to one of Claims 1 to 5, **characterized in that** kinematic data of the electronic servo steering system (1) are taken into account in the determination of the at least one approximation function (13, 14).

7. Computer program having program code means for carrying out a method according to one of Claims 1 to 6 when the program is run on a microprocessor of a computer, in particular on an electronic control unit (11) of an electronic servo steering system (1).

8. Computer program product having program code means which are stored on a computer-readable data carrier for carrying out a method according to one of Claims 1 to 6, when the program is run on a microprocessor of a computer, in particular on an electronic control unit (11) of an electronic servo steering system (1).

9. Electronic servo steering system (1) of a motor vehicle, having
- a steering handle (2) for predefining a steering wheel angle (δ_{S}) as a measure of a desired wheel steering angle (δ_{Fm}) for at least one steerable wheel (5a, 5b) of the motor vehicle,
- a steering gear (4) which converts the steering wheel angle (δ_{S}) into the wheel steering angle (δ_{Fm}) of the at least one steerable wheel (5a, 5b) of the motor vehicle,
- superimposition means (8) for producing an additional angle (δ_{M}) by means of an additional angle setting element (9) and for producing an input angle (δ_{G}) of the steering gear (4) from a superimposition of the additional angle (δ_{M}) on the steering wheel angle (δ_{S}), and
- an electronic control unit (11) configured to run the computer program according to Claim 7.

## Revendications

1. Procédé d'exploitation d'un système de direction assistée électronique (1) d'un véhicule automobile, selon lequel un angle de volant de direction (δ_{S}) est prédéfini au moyen d'une manette de direction (2) en tant que mesure pour un angle d'orientation de roue (δ_{Fm}) souhaité pour au moins une roue orientable (5a, 5b) du véhicule automobile, selon lequel une fonction utile (VSR) délivre un rapport de démultiplication variable en fonction d'au moins une grandeur (vₓ, δ_{S}) spécifique au véhicule entre l'angle de volant de direction (δ_{S}) et l'angle d'orientation de roue (δ_{Fm}), en ce qu'un angle supplémentaire (δ_{M}) est généré au moyen d'un angle supplémentaire de consigne (δ_{Md}) à réguler déterminé et un angle d'entrée (δ_{G}) d'un mécanisme de direction (4) du système de direction assistée électronique (1) est produit à partir d'une superposition de l'angle de volant de direction (δ_{S}) avec l'angle supplémentaire (δ_{M}), l'angle d'entrée (δ_{G}) du mécanisme de direction (4) étant converti en l'angle d'orientation de roue (δ_{Fm}) pour l'au moins une roue orientable (5a, 5b) du véhicule automobile, l'angle supplémentaire de consigne (δ_{Md}) à réguler correspondant étant déterminé au moyen de l'au moins une grandeur (v_{X}, δ_{S}) spécifique au véhicule en tant que grandeur d'entrée à partir d'au moins une courbe caractéristique et/ou d'au moins un diagramme caractéristique par le biais de points de référence et/ou par interpolation, **caractérisé en ce que** l'angle supplémentaire de consigne (δ_{Md}) est déterminé par le biais d'au moins une fonction d'approximation (13, 14) qui est constante au moins dans ses deux premières dérivations et qui présente au moins une première grandeur (vₓ, δ_{S}) spécifique au véhicule en tant que grandeur d'entrée.

2. Procédé selon la revendication 1, **caractérisé en ce que** plusieurs fonctions d'approximation (13, 14), notamment différentes, sont stockées dans un diagramme caractéristique qui présente au moins une deuxième grandeur (vₓ, δ_{S}) spécifique au véhicule en tant que grandeur d'entrée.

3. Procédé selon la revendication 1 ou 2, **caractérisé en ce que** l'au moins une fonction d'approximation est un polynôme (14), notamment de type Newton.

4. Procédé selon la revendication 1 ou 2, **caractérisé en ce que** l'au moins une fonction d'approximation est une fonction spline comprenant au moins un degré quadratique, notamment une fonction spline cubique (13).

5. Procédé selon l'une des revendications 1 à 4, **caractérisé en ce que** l'au moins une première ou l'au moins une deuxième grandeur spécifique au véhicule est la vitesse du véhicule (vₓ) ou l'angle de volant de direction (δ_{S}).

6. Procédé selon l'une des revendications 1 à 5, **caractérisé en ce que** les données cinématiques du système de direction assistée électronique (1) sont prises en compte lors de la détermination de l'au moins une fonction d'approximation (13, 14).

7. Programme informatique comprenant des moyens de code de programme pour mettre en oeuvre un procédé selon l'une des revendications 1 à 6 lorsque le programme est exécuté sur un microprocesseur d'un ordinateur, notamment sur un contrôleur électronique (11) d'un système de direction assistée électronique (1).

8. Produit de programme informatique comprenant des moyens de code de programme, qui sont enregistrés sur un support de données lisible par ordinateur, pour mettre en oeuvre un procédé selon l'une des revendications 1 à 6 lorsque le programme est exécuté sur un microprocesseur d'un ordinateur, notamment sur un contrôleur électronique (11) d'un système de direction assistée électronique (1).

9. Système de direction assistée électronique (1) d'un véhicule automobile comprenant
- une manette de direction (2) pour prédéfinir un angle de volant de direction (δ_{S}) en tant que mesure pour un angle d'orientation de roue (δ_{Fm}) souhaité pour au moins une roue orientable (5a, 5b) du véhicule automobile,
- un mécanisme de direction (4) qui convertit l'angle de volant de direction (δ_{S}) en l'angle d'orientation de roue (δ_{Fm}) de l'au moins une roue orientable (5a, 5b) du véhicule automobile,
- des moyens de superposition (8) pour générer un angle supplémentaire (δ_{M}) par le biais d'un organe de réglage d'angle supplémentaire (9) et pour produire un angle d'entrée (δ_{G}) du mécanisme de direction (4) à partir d'une superposition de l'angle de volant de direction (δ_{S}) avec l'angle supplémentaire (δ_{M}), et
- un contrôleur électronique (11) configuré pour exécuter le programme informatique selon la revendication 7.
